# EUROPÄISCHE PATENTSCHRIFT

(11) **EP 2 905 943 B1**
(45) Veröffentlichungstag und Bekanntmachung des Hinweises auf die Patenterteilung: **08.01.2020**
(21) Anmeldenummer: 14154541.8
(22) Anmeldetag: 10.02.2014
(51) Int. Cl.: H04L 29/08, G06Q 20/12, H04L 29/06

(54) **Verfahren zur Bereitstellung von externen Kontrolldiensten in einem Netzwerk**
Method for providing external control services in a network
Procédé permettant de mettre à disposition des services de contrôle externes dans un réseau

(43) Veröffentlichungstag der Anmeldung: 12.08.2015
(73) Patentinhaber: Deutsche Telekom AG, 53113 Bonn (DE)
(72) Erfinder: Scherer, Christoph, 64625 Bensheim (DE)
(74) Vertreter: Schwöbel, Thilo K.

(56) Entgegenhaltungen:
- EP-A1- 2 442 528
- WO-A1-2010/022826
- US-A1- 2012 008 786
- LUTZ D J ET AL: "Harmonizing service and network provisioning for federative access in a mobile environment", NETWORK OPERATIONS AND MANAGEMENT SYMPOSIUM, 2008. NOMS 2008. IEEE, IEEE, PISCATAWAY, NJ, USA, 7. April 2008 (2008-04-07), Seiten 843-846, XP031290612, ISBN: 978-1-4244-2065-0
- DIANA BERBECARU ET AL: "Exploiting Proxy-Based Federated Identity Management in Wireless Roaming Access", 29. August 2011 (2011-08-29), TRUST, PRIVACY AND SECURITY IN DIGITAL BUSINESS, SPRINGER BERLIN HEIDELBERG, BERLIN, HEIDELBERG, PAGE(S) 13 - 23, XP019162338, ISBN: 978-3-642-22889-6 * Seiten 14,15,18 * * Seite 20; Abbildung 3 *

## Beschreibung

### Stand der Technik

Die Erfindung betrifft ein Verfahren zur Bereitstellung von externen Kontrolldiensten in einem Netzwerk.

Beispielsweise werden Webapplikationen auf einem Webserver des Netzwerks (beispielsweise dem Internet) bereitgestellt, um einem Benutzer eines mit dem Netzwerk verbundenen (mobilen oder ortsgebundenen) Endgeräts die Verwendung der Webapplikation zu ermöglichen. Hierzu wird die Webapplikation auf dem Webserver des Betreibers des Netzwerks und/oder auf dem Endgerät des Benutzers (beispielsweise im Webbrowser) ausgeführt. Eine solche Webanwendung ist beispielsweise ein über das Internet bereitgestelltes Online-Shopsystem, wobei zur Bestellung von Waren und/oder Dienstleistungen verschiedene Kontrolldienste (z.B. Authentifizierungsdienste und/oder Autorisierungsdienste zur Authentifizierung bzw. Autorisierung des Benutzers) für einen möglichst zuverlässigen und sicheren Bestellvorgang erforderlich sind.

Die Bereitstellung mehrerer Kontrolldienste in einem eine Vielzahl solcher Webapplikationen umfassenden Netzwerk ist für einen Betreiber des Netzwerks typischerweise mit einem hohen technischen Aufwand verbunden. Es besteht daher ein Bedarf, die Bereitstellung der Kontrolldienste in dem Netzwerk zu verbessern. In dem Artikel "Harmonizing services and network provisioning for federative access in a mobile environment" von Lutz D. J. et al. wird eine Gesamtarchitekt für den Zusammenschluss mehrerer Domänen offenbart. Das Dokument EP2442528 offenbart ein System und eine Methode eines Sicherheitsmodells, welche Interoperabilität mit auswärtigen Domänen anbietet.

### Offenbarung der Erfindung

Die Erfindung wird in den unabhängigen Ansprüchen definiert. Der Erfindung liegt die Aufgabe zugrunde, ein Verfahren zur Bereitstellung von Kontrolldiensten in einem Netzwerk anzugeben, welches derart verbessert ist, dass der technische Aufwand zur Bereitstellung der Kontrolldienste reduziert wird, insbesondere wenn es sich bei den Kontrolldiensten um externe Kontrolldienste (d.h. Kontrolldienste eines fremden Betreibers, der nicht Betreiber des Netzwerkes ist) handelt.

Diese Aufgabe wird erfindungsgemäß gelöst durch ein Verfahren zur Bereitstellung von externen Kontrolldiensten in einem Netzwerk, wobei das Netzwerk eine erste Anwendungskomponente, eine zweite Anwendungskomponente und eine Vermittlungskomponente umfasst, wobei eine erste und zweite Kontrollkomponente an dem Netzwerk angebunden ist, wobei das Verfahren folgende Verfahrensschritte umfasst:
-- Empfangen einer von der ersten Anwendungskomponente an die Vermittlungskomponente gesendeten ersten Kontrollanfrageinformation,
-- Empfangen einer von der zweiten Anwendungskomponente an die Vermittlungskomponente gesendeten zweiten Kontrollanfrageinformation,
-- Abfragen einer ersten Kontrollantwortinformation bei der ersten oder zweiten Kontrollkomponente in Abhängigkeit der empfangenen ersten Kontrollanfrageinformation,
-- Abfragen einer zweiten Kontrollantwortinformation bei der ersten oder zweiten Kontrollkomponente in Abhängigkeit der empfangenen zweiten Kontrollanfrageinformation,
-- Übertragen der abgefragten ersten Kontrollantwortinformation an die erste Anwendungskomponente und der zweiten Kontrollantwortinformation an die zweite Anwendungskomponente.

Es ist gemäß der vorliegenden Erfindung in vorteilhafter Weise möglich, dass durch das erfindungsgemäße Verfahren externe Kontrolldienste in einem Netzwerk so bereitgestellt werden, dass der technische Aufwand - d.h. insbesondere der Aufwand zur Pflege der verschiedenen Schnittstellen zur Bereitstellung der Kontrolldienste für die Anwendungskomponenten reduziert wird. Es ist dabei erfindungsgemäß besonders bevorzugt, dass die Vermittlungskomponente die externen Kontrolldienste gegenüber den internen oder eigenen Diensten (d.h. den Diensten, die unter Kontrolle des Betreibers des Netzwerks stehen) kapselt (verpackt). Hierdurch ist es vorteilhaft möglich, dass die Nutzung der Kontrolldienste vereinfacht wird. Insbesondere ist hier der Begriff "kapseln" im Sinne einer Datenkapselung zu verstehen - d.h. als ein Prozess, der die zu versendenden Daten oder Informationen in einem Header (und/oder Trailer) der jeweiligen Schichten (entsprechend eines Referenzmodells für Netzwerkprotokolle) ergänzt.

Beispielsweise wird bei einer kompromittierten Schnittstelle zur ersten Kontrollkomponente (nur) die entsprechende Schnittstelle der Vermittlungskomponente zur ersten Kontrollkomponente konfiguriert bzw. gepflegt. Das bedeutet insbesondere, dass nicht die Schnittstellen aller Anwendungskomponenten konfiguriert bzw. gepflegt werden müssen. Weiterhin wird die Vermittlungskomponente in einem solchen Fall insbesondere derart konfiguriert, dass ein Zugriff auf die erste Kontrollkomponente (mit der kompromittierten Schnittstelle) nicht mehr möglich ist. Hierdurch ist es vorteilhaft möglich, auf Sicherheitsprobleme vergleichsweise schnell zu reagieren.

Erfindungsgemäß bevorzugt umfasst eine Anwendungskomponente:
-- ein Präsentationssystem zur Präsentation von Waren und/oder Dienstleistungen über das Netzwerk (insbesondere für ein Benutzer der auf die Anwendungskomponente zugreift),
-- eine Anwendungsdatenbank mit Produktinformationen über die Waren und/oder Dienstleistungen,-- weitere Funktionalitäten bzw. Werkzeuge.

Beispielsweise ist die Anwendungskomponente zur Bereitstellung eines Anwendungsdienstes (beispielsweise eines E-Mail-Dienstes oder einer anderen Applikation) konfiguriert, wobei insbesondere der Anwendungsdienst (nur) über einen Authentifizierungsvorgang bzw. Anmeldevorgang (d.h. durch einen Login bzw. durch einloggen) vermittelt (bzw. bereitgestellt) wird.

Erfindungsgemäß bevorzugt ist ein externer Kontrolldienst ein fremder Dienst eines Betreibers eines fremden Netzwerks, welches insbesondere die erste und zweite Kontrollkomponente aufweist.

Bevorzugt ist die erste Kontrollkomponente als ein Identitätsprovider (IDP) konfiguriert. Insbesondere ist der IDP derart konfiguriert ist, dass eine Kontrollantwortinformation in Abhängigkeit einer Kontrollanfrageinformation bereitgestellt (d.h. mittels einer Antwortnachricht an die jeweils anfragende Komponente übertragen) wird, wobei die Kontrollanfrageinformation insbesondere benutzerspezifische Kontrolldaten (wie beispielsweise Login-Daten) aufweist, wobei die Kontrollantwortinformation insbesondere eine Authentifizierungsinformation aufweist.

Bevorzugt ist die zweite Kontrollkomponente als ein Bezahlserviceprovider (PSP) konfiguriert. Insbesondere ist der PSP derart konfiguriert, dass eine Kontrollantwortinformation in Abhängigkeit einer Kontrollanfrageinformation bereitgestellt (d.h. als mittels einer zweiten Antwortnachricht an die jeweils anfragende Komponente übertragen) wird, wobei die Kontrollanfrageinformation insbesondere benutzerspezifische Kontrolldaten (d.h. Bezahldaten, wie beispielsweise Bankdaten und/oder andere Kontodaten und/oder einen Geldbetrag) umfasst. Bevorzugt wird durch den PSP in Abhängigkeit der Kontrollanfrageinformation die Kontrollantwortinformation generiert, wobei die Kontrollantwortinformation eine Autorisierungsinformation zur Autorisierung der Kontrolldaten (und optional zur Freischaltung einer oder mehrerer Zahlarten) aufweist. Die Autorisierungsinformation wird insbesondere mittels eines Autorisierungsverfahrens generiert, wobei im Autorisierungsverfahren beispielsweise eine Genehmigung einer EC-oder Kreditkartenzahlung durch das Kreditinstitut des Karteninhabers durchgeführt wird. Bei erfolgreicher Autorisierung wird die Autorisierungsinformation insbesondere derart generiert, dass die Autorisierungsinformation eine Information darüber aufweist, dass ein Bank- bzw. Kreditkartenkonto des Benutzers mit einem (durch die Kontrolldaten an den PSP übermittelten) Geldbetrag belastet werden kann. Insbesondere kann sowohl die erste als auch die zweite Kontrollkomponente als IDP, PSP oder als Provider eines anderen Kontrolldienstes konfiguriert sein.

Erfindungsgemäß bevorzugt umfasst der Begriff "Komponente" (d.h. insbesondere eine Clientkomponente, Anwendungskomponente, Vermittlungskomponente und/oder Kontrollkomponente) eine Softwarekomponente und/oder Hardwarekomponente, die insbesondere zur Kommunikation über das Netzwerk mit einer entsprechenden anderen Komponente (d.h. insbesondere eine Clientkomponente, Anwendungskomponente, Vermittlungskomponente und/oder Kontrollkomponente) konfiguriert ist. Das bedeutet insbesondere, dass eine solche Komponente als Serverkomponente und/oder Clientkomponente konfiguriert ist, wobei insbesondere durch die Serverkomponente einer Clientkomponente ein Dienst bereitgestellt wird (d.h. durch Austausch von Nachrichten - mit Anfrageinformationen und Antwortinformationen - zwischen Clientkomponente und Serverkomponente). Beispielsweise wird einem Webbrowser (Clientkomponente) eines Benutzers eine Webanwendung (beispielsweise ein Onlineshop) durch die Anwendungskomponente (hier als Serverkomponente) bereitgestellt. Weiterhin wird beispielsweise durch eine Kontrollkomponente (hier als Serverkomponente) der Vermittlungskomponente (hier als Clientkomponente) der jeweilige Kontrolldienst bereitgestellt, wobei insbesondere durch die Vermittlungskomponente (hier als Serverkomponente) der Anwendungskomponente (hier als Clientkomponente) der Kontrolldienst bereitgestellt (vermittelt) wird.

Erfindungsgemäß bevorzugt ist eine Schnittstelle derjenige Teil einer Komponente, welcher der Kommunikation dient. Der Austausch von Informationen erfolgt insbesondere in Form von physikalischen (z. B. Elektrische Spannung, Stromstärke) oder logischen Größen (Daten) über die Schnittstelle.

Erfindungsgemäß ist es bevorzugt, dass die Vermittlungskomponente eine Regelkomponente (Regellogik bzw. Regelwerk) und eine Datenbank aufweist, wobei die Vermittlungskomponente (unter Nutzung der Datenbank) zur Datenhaltung bezüglich einer Information über die Regelkomponente konfiguriert ist.

Erfindungsgemäß ist es bevorzugt, dass die Vermittlungskomponente zur Durchführung eines Regelverfahrens konfiguriert ist, wobei in einem ersten Regelschritt durch die Vermittlungskomponente bestimmt wird, bei welcher Kontrollkomponente (d.h. beispielsweise der ersten, einer weiteren ersten, zweiten oder einer weiteren zweiten Kontrollkomponente) die erste Kontrollantwortinformation abgefragt wird, wobei in einem zweiten Regelschritt die erste Kontrollantwortinformation bei der im ersten Regelschritt bestimmten Kontrollkomponente abgefragt wird. Insbesondere wird im ersten Regelschritt eine Regelinformation bestimmt, wobei sich die Regelinformation beispielsweise auf eine Verwendbarkeit einer Kontrollkomponenten und/oder auf einen Zugriffs auf eine Kontrollkomponenten bezieht. Insbesondere umfasst die Regelinformation jeweils eine Regelkomponente für jede Kombination aus Anwendungskomponente und Kontrollkomponente. Insbesondere wird in Abhängigkeit der Regelinformation diejenige Kontrollkomponente bestimmt, bei welcher die Kontrollantwortinformation abgefragt wird.

Beispielsweise umfasst die erste Anwendungskomponente ein Erotikportal im Zusammenhang mit einem anonymen Bezahldienst und die zweite Anwendungskomponente einen Onlineshop im Zusammenhang mit einem weiteren Bezahldienst. Insbesondere wird der anonyme Bezahldienst durch die erste Kontrollkomponente (erster PSP) und der weitere Bezahldienst durch die zweite Kontrollkomponente (zweiter PSP) bereitgestellt. Beispielsweise wird für den weiteren Bezahldienst eine Umsatzbeteiligung (Absolut- und/oder Relativbetrag) je Transaktion verlangt. Erfindungsgemäß bevorzugt ist die Vermittlungskomponente derart konfiguriert, dass die zweite Kontrollantwortinformation (bezüglich des Onlineshops) - insbesondere nur dann - bei der zweiten Kontrollkomponente abgefragt wird, wenn die Kontrollantwortinformation mit einem Kontrollwert (beispielsweise einem Preis) zusammenhängt, der einen Kontrollschwellwert (beispielsweise eine Preisgrenze) übersteigt. Das bedeutet beispielsweise, dass die Vermittlungskomponente den weiteren Bezahldienst des zweiten PSPs (der zweiten Anwendungskomponente) nur dann anbietet bzw. bereitstellt, wenn der Preis größer als ein (definierter) Mindestpreis ist.

Alternativ (bzw. zusätzlich) umfasst beispielsweise die erste (bzw. weitere erste) Kontrollkomponente einen ersten IDP in Zusammenhang mit einer ersten Sicherheitsstufe und die zweite (bzw. weitere zweite) Kontrollkomponente einen zweiten IDP in Zusammenhang mit einer zweiten Sicherheitsstufe. Insbesondere ist die erste Sicherheitsstufe (Sicherheitslevel) höher als die zweite Sicherheitsstufe. Insbesondere ist die Regelinformation derart konfiguriert, dass im ersten Regelschritt die erste Kontrollkomponente bestimmt wird, wenn die erste Kontrollanfrageinformation mit einer Anfrage der ersten Sicherheitsstufe zusammenhängt und/oder im ersten Regelschritt die zweite Kontrollkomponente bestimmt wird, wenn die erste Kontrollanfrageinformation mit einer Anfrage der zweiten Sicherheitsstufe zusammenhängt.

Erfindungsgemäß ist es bevorzugt, dass die Kommunikation der Vermittlungskomponente mit der ersten und zweiten Anwendungskomponente jeweils über eine Schnittstelle der Vermittlungskomponente einer ersten Schnittstellensorte erfolgt, wobei die Kommunikation der Vermittlungskomponente mit der ersten und zweiten Kontrollkomponente jeweils über eine zweite Schnittstelle der Vermittlungskomponente einer zweiten Schnittstellensorte erfolgt.

Es ist hierdurch erfindungsgemäß besonders vorteilhaft möglich, dass die externen Kontrolldienste gegenüber den internen Diensten derart gekapselt werden, dass jeweils nur die erste Schnittstellensorte für die Kommunikation mit der Anwendungskomponente verwendet wird und nur die zweite Schnittstellensorte für die Kommunikation mit der Kontrollkomponente verwendet wird.

Erfindungsgemäß bevorzugt bedeutet "Schnittstelle einer ersten Schnittstellensorte" eine Schnittstelle der Vermittlungskomponente die zur Kommunikation zwischen Anwendungskomponente und Vermittlungskomponente derart konfiguriert ist, dass ein oder mehrere Kontrolldienste einer oder mehrerer Kontrollkomponenten der Anwendungskomponente (durch Kapselung der über die zweite Schnittstelle übertragenen Daten) bereitgestellt wird. Insbesondere bedeutet "Schnittstelle einer zweiten Schnittstellensorte" eine Schnittstelle der Vermittlungskomponente die zur Kommunikation zwischen einer Kontrollkomponente und der Vermittlungskomponente derart konfiguriert ist, dass ein Kontrolldienst der Kontrollkomponente der Vermittlungskomponente (durch Kapselung der über die erste Schnittstelle übertragenen Daten) bereitgestellt wird. Bevorzugt ist eine solche erste und/oder zweite Schnittstelle eine Datenschnittstelle, Hardwareschnittstelle, Netzwerkschnittstelle oder Softwareschnittstelle.

Erfindungsgemäß bevorzugt ist es weiterhin, dass die Vermittlungskomponente derart betrieben wird bzw. konfiguriert ist, dass die Vermittlungskomponente gegenüber den Anwendungskomponente n über die Schnittstelle der ersten Sorte wie eine Kontrollkomponente agiert, welche insbesondere die Schnittstelle der zweiten Sorte gegenüber den externen Kontrolldiensten kapselt.

Erfindungsgemäß ist es ferner bevorzugt, dass durch die Vermittlungskomponente zur Kommunikation mit der ersten und zweiten Anwendungskomponente ein erstes Übertragungsprotokoll verwendet wird und zur Kommunikation mit der ersten und zweiten Kontrollkomponente ein von dem ersten Übertragungsprotokoll verschiedenes zweites Übertragungsprotokoll verwendet wird.

Es ist hierdurch erfindungsgemäß besonders vorteilhaft möglich, dass die Vermittlungskomponente (hier auch als "Broker" bezeichnet) mit den Anwendungskomponenten mittels anderer Übertragungsprotokolle agiert als mit den externen Kontrollkomponenten. Beispielsweise werden als Übertragungsprotokoll für die Kommunikation zwischen Vermittlungskomponente und den Applikationskomponenten und/oder zwischen Vermittlungskomponente und den Kontrollkomponenten eines oder mehrere der folgenden Übertragungsprotokolle verwendet:
-- Security Assertion Markup Language (SAML), d.h. ein XML-Framework zum Austausch von Authentifizierungsinformationen und/oder Autorisierungsinformationen; SAML stellt Funktionen bereit, um sicherheitsbezogene Informationen zu beschreiben und zu übertragen,
-- OpenID (offene Identifikation), d.h. ein dezentrales Authentifizierungssystem für webbasierte Dienste; OpenID erlaubt einem Benutzer, sich ohne Benutzername und Passwort bei allen das System unterstützenden Websites anzumelden;
-- OAuth ist ein offenes Protokoll, das eine standardisierte, sichere Schnittstellen-Autorisierung für Desktop-, Web- und Mobile-Applikationen erlaubt.
Erfindungsgemäß ist es bevorzugt, dass für die Kommunikation der Vermittlungskomponente mit der ersten und/oder zweiten Anwendungskomponente eine erste Sicherheitsrichtlinie verwendet wird und für die Kommunikation der Vermittlungskomponente mit der ersten und/oder zweiten Kontrollkomponente eine zweite Sicherheitsrichtlinie verwendet wird.

Es ist hierdurch erfindungsgemäß besonders vorteilhaft möglich, dass auf beiden Seiten der Kommunikation der Vermittlungskomponente - d.h. einerseits mit den Anwendungskomponenten und andererseits mit den Kontrollkomponenten - unterschiedliche Sicherheitsrichtlinien (welche auch als Security-Richtlinien bezeichnet werden) realisiert werden. Die Sicherheitsrichtlinien werden auch als sogenannte geschlossene Dreiecke (beispielsweise im Falle einer zusätzlichen Host-to-Host Kommunikation zwischen Vermittlungskomponente und Anwendungskomponente und/oder zwischen Vermittlungskomponente und Kontrollkomponente) oder als sogenannte offene Dreiecke (beispielsweise wenn jegliche Information - d.h. sowohl die Kontrollanfrageinformation als auch die Kontrollantwortinformation - über eine Clientkomponente - z.B. den Webbrowser beim Kunden - verschlüsselt in den sogenannten Redirect-URLs (Uniform Ressource Locator) transferiert wird. Insbesondere durch die zusätzliche Host-to-Host Kommunikation wird ein höheres Maß an Sicherheit erzielt, da die Kontrollanfrageinformation und/oder Kontrollantwortinformation hierbei derart über die Vermittlungskomponente direkt (d.h. ohne den Weg über den Webbrowser des Nutzers) zwischen Anwendungskomponente und Kontrollkomponente übertragen werden, dass beispielsweise eine Manipulation der Authentifizierungsinformation und/oder Autorisierungsinformation durch den Benutzer nicht möglich ist.

Erfindungsgemäß ist es bevorzugt, dass die erste Kontrollkomponente eine Authentifizierungskomponente und die zweite Kontrollkomponente eine Autorisierungskomponente ist.

Es ist hierdurch erfindungsgemäß besonders vorteilhaft möglich, dass vergleichsweise sichere und zuverlässige externe Authentifizierungsdienste und/oder externe Autorisierungsdienste (als externe Kontrolldienste) für die Anwendungskomponenten bereitgestellt werden, wobei dennoch der Aufwand zur Bereitstellung und Pflege der Schnittstellen reduziert wird.

Erfindungsgemäß bevorzugt umfasst eine Kontrollkomponente:
-- eine Administrationsdatenbank zur Benutzerverwaltung (Authentifizierungskomponente) und/oder
-- ein Bezahlsystem zur Abwicklung des Bezahlvorgangs (Autorisierungskomponente). Erfindungsgemäß ist es bevorzugt,
-- dass die Vermittlungskomponente die erste und/oder zweite Kontrollantwortinformation bei der Authentifizierungskomponente abfragt, wenn die erste und/oder zweite Kontrollanfrageinformation eine Authentifizierungsanfrageinformation aufweist, wobei die abgefragte erste und/oder zweite Kontrollantwortinformation eine Authentifizierungsinformation aufweist, und/oder
-- dass die Vermittlungskomponente die erste und/oder zweite Kontrollantwortinformation bei der Autorisierungskomponente abfragt, wenn die erste und/oder zweite Kontrollanfrageinformation eine Autorisierungsanfrageinformation aufweist, wobei die abgefragte erste und/oder zweite Kontrollantwortinformation eine Autorisierungsinformation aufweist.

Erfindungsgemäß ist es bevorzugt, dass das Verfahren ferner folgende Verfahrensschritte umfasst:
-- Empfangen von Kontrolldaten durch die erste Anwendungskomponente, wobei die Kontrolldaten von einer Clientkomponente an die erste Anwendungskomponente übertragen werden,
-- Generieren der ersten Kontrollanfrageinformation, sodass die erste Kontrollanfrageinformation die Kontrolldaten zur Abfrage der ersten Kontrollantwortinformation aufweist.

Erfindungsgemäß ist es bevorzugt, dass die erste und zweite Anwendungskomponente Webapplikationen sind, wobei die Clientkomponente ein Webbrowser ist, wobei die Kontrolldaten von einem Benutzer des Webbrowsers abgefragt werden oder von der Clientkomponente automatisch ermittelt werden, wobei insbesondere als Kontrolldaten benutzerspezifische Login-Daten oder Bezahldaten verwendet werden.

Erfindungsgemäß ist es bevorzugt, dass das Verfahren ferner folgende Verfahrensschritte umfasst:
-- Empfangen einer von der ersten Anwendungskomponente an die Vermittlungskomponente gesendeten weiteren ersten Kontrollanfrageinformation,
-- Abfragen einer weiteren ersten Kontrollantwortinformation bei der ersten Kontrollkomponente, einer weiteren ersten Kontrollkomponente, der zweiten Kontrollkomponente oder einer weiteren zweiten Kontrollkomponente in Abhängigkeit der empfangenen weiteren ersten Kontrollanfrageinformation,
-- Übertragen der abgefragten weiteren ersten Kontrollantwortinformation an die erste Anwendungskomponente.

Erfindungsgemäß ist es bevorzugt, dass das Verfahren ferner folgende Verfahrensschritte umfasst:
-- Empfangen, an der Vermittlungskomponente, einer Vielzahl von Kontrollanfrageinformationen von einer Vielzahl von Anwendungskomponenten, wobei jede Kontrollanfrageinformation eindeutig einer Anwendungskomponenten der Vielzahl von Anwendungskomponenten zugeordnet ist,
-- Abfragen einer Vielzahl von Kontrollantwortinformationen bei einer Vielzahl von Kontrollkomponenten, wobei jede Kontrollantwortinformation der Vielzahl von Kontrollantwortinformationen jeweils bei genau einer Kontrollkomponente der Vielzahl von Kontrollkomponenten in Abhängigkeit genau einer Kontrollanfrageinformation der Vielzahl von Kontrollanfrageinformationen abgefragt wird,
-- Übertragen der Vielzahl von abgefragten Kontrollantwortinformationen an die jeweils eindeutig zugeordnete Anwendungskomponente der Vielzahl von Anwendungskomponenten.

Es ist hierdurch erfindungsgemäß besonders vorteilhaft möglich, dass - insbesondere im Hinblick auf eine Bereitstellung der Vielzahl von Kontrolldiensten für eine Vielzahl von Anwendungskomponenten - eine besonders effiziente und dennoch sichere und zuverlässige Bereitstellung der externen Kontrolldienste ermöglicht wird.

Ein weiterer Gegenstand der vorliegenden Erfindung ist eine Vermittlungskomponente zur Bereitstellung von externen Kontrolldiensten in einem Netzwerk, wobei die Vermittlungskomponente zur Kommunikation mit einer ersten Anwendungskomponente, einer zweiten Anwendungskomponente einer ersten Kontrollkomponente und einer zweiten Kontrollkomponenten konfiguriert ist, wobei die Vermittlungskomponente zum Empfangen einer von der ersten Anwendungskomponente an die Vermittlungskomponente gesendeten ersten Kontrollanfrageinformation und zum Empfangen einer von der zweiten Anwendungskomponente an die Vermittlungskomponente gesendeten zweiten Kontrollanfrageinformation konfiguriert ist, wobei die Vermittlungskomponente zum Abfragen einer ersten Kontrollantwortinformation bei der ersten oder zweiten Kontrollkomponente in Abhängigkeit der empfangenen ersten Kontrollanfrageinformation konfiguriert ist, wobei die Vermittlungskomponente zum Abfragen einer zweiten Kontrollantwortinformation bei der ersten oder zweiten Kontrollkomponente in Abhängigkeit der empfangenen zweiten Kontrollanfrageinformation konfiguriert ist, wobei die Vermittlungskomponente zum Übertragen der abgefragten ersten Kontrollantwortinformation an die erste Anwendungskomponente und zum Übertragen der zweiten Kontrollantwortinformation an die zweite Anwendungskomponente konfiguriert ist.

Es ist hierdurch erfindungsgemäß besonders vorteilhaft möglich, dass die Vermittlungskomponente derart konfiguriert ist, dass die Vermittlungskomponente gegenüber den Anwendungskomponenten wie eine Kontrollkomponente agiert. Auf diese Weise wird eine effiziente und dennoch zuverlässige und sichere Vermittlung und Bereitstellung der externen Dienste an die (Vielzahl von) Anwendungskomponenten realisiert.

Ferner ist es - insbesondere im Hinblick auf die Vermittlungskomponente - erfindungsgemäß bevorzugt, dass die Vermittlungskomponente für die Kommunikation mit der ersten und zweiten Anwendungskomponente jeweils eine Schnittstelle einer ersten Schnittstellensorte aufweist und für die Kommunikation mit der ersten und zweiten Kontrollkomponente jeweils eine Schnittstelle einer zweiten Schnittstellensorte aufweist.

Es ist hierdurch erfindungsgemäß besonders vorteilhaft möglich, dass die Vermittlungskomponente derart konfiguriert ist, dass die Vermittlungskomponente gegenüber den Anwendungskomponenten mittels der Schnittstelle der ersten Schnittstellensorte wie eine Kontrollkomponente agiert, welche insbesondere die Schnittstelle der zweiten Schnittstellensorte (d.h. die über die zweite Schnittstelle übertragenen Daten) gegenüber den externen Kontrolldiensten kapselt.

Ferner ist es - insbesondere im Hinblick auf die Vermittlungskomponente - erfindungsgemäß bevorzugt, dass die Vermittlungskomponente derart konfiguriert ist, dass die Vermittlungskomponente in Abhängigkeit der empfangenen ersten und/oder zweiten Kontrollanfrageinformation festlegt, bei welcher Kontrollkomponente der ersten und zweiten Kontrollkomponente die Kontrollantwortinformation abgefragt wird.

Es ist hierdurch - insbesondere im Hinblick auf die Vermittlungskomponente - erfindungsgemäß besonders vorteilhaft möglich, dass die Vermittlungskomponente Funktionalitäten und/oder Logiken (Software oder Hardware) aufweist, welche festlegen, welche Kontrollkomponente für eine Applikation verwendet werden darf (bzw. verwendet wird). Die Festlegung bzw. Auswahl erfolgt beispielsweise in Abhängigkeit der Sicherheitsstufe (bzw. der verwendeten Sicherheitsrichtlinie) der Anwendungskomponente, der Höhe eines (benutzerspezifischen) Geldbetrags, einer ermittelten Lokation (des Benutzer) oder anderer Daten.

Ferner bezieht sich die vorliegende Erfindung auch auf ein Computerprogramm mit Programmcodemitteln, mit deren Hilfe alle Schritte des erfindungsgemäßen Verfahrens durchführbar sind, wenn das Computerprogramm auf wenigstens einer programmierbaren Einrichtung eines Netzwerkes ausgeführt wird.

Weiterhin ist Gegenstand der vorliegenden Erfindung ein Computerprogrammprodukt mit einem computerlesbaren Medium und einem auf dem computerlesbaren Medium gespeicherten Computerprogramm mit Programmcodemitteln, die dazu geeignet sind, dass alle Schritte des erfindungsgemäßen Verfahrens durchführbar sind, wenn das Computerprogramm auf wenigstens einer programmierbaren Einrichtung eines Netzwerks ausgeführt wird.

Weitere Einzelheiten, Merkmale und Vorteile der Erfindung ergeben sich aus den Zeichnungen, sowie aus der nachfolgenden Beschreibung von bevorzugten Ausführungsformen anhand der Zeichnungen. Die Zeichnungen illustrieren dabei lediglich beispielhafte Ausführungsformen der Erfindung, welche den wesentlichen Erfindungsgedanken nicht einschränken.

### Kurze Beschreibung der Zeichnungen

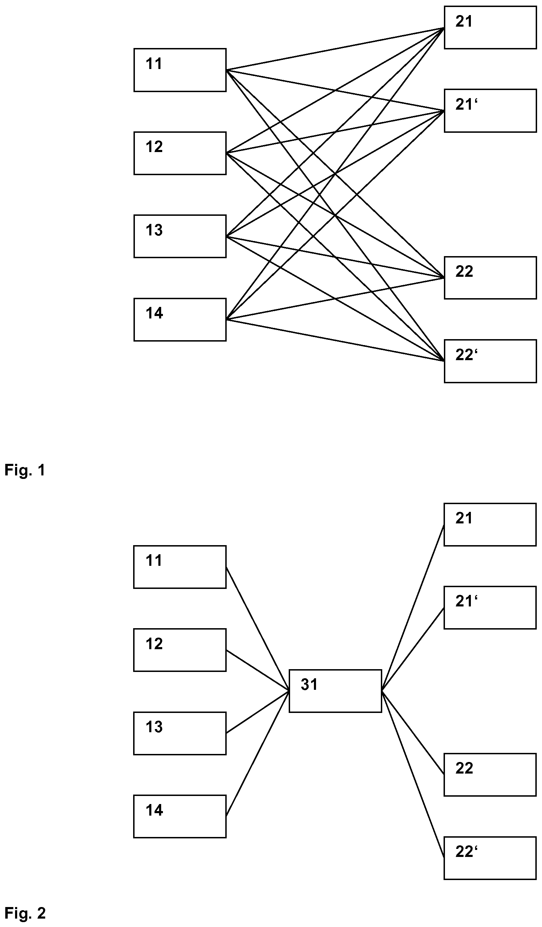

- **Figuren 1 bis 3**: zeigen schematische Ansichten eines erfindungsgemäßen Verfahrens.

### Ausführungsformen der Erfindung

In den verschiedenen Figuren sind gleiche Teile stets mit den gleichen Bezugszeichen versehen und werden daher in der Regel auch jeweils nur einmal benannt bzw. erwähnt.

In Figur 1 ist schematisch eine Ansicht eines Netzwerks dargestellt. Hier weist das Netzwerk eine erste Anwendungskomponente 11, eine zweite Anwendungskomponente 12, eine dritte Anwendungskomponente 13 und/oder eine vierte Anwendungskomponente 14 auf. Weiterhin sind eine erste Kontrollkomponente 21, eine weitere erste Kontrollkomponente 21', eine zweite Kontrollkomponente 22 und eine weitere zweite Kontrollkomponente 22' an das Netzwerk angebunden.

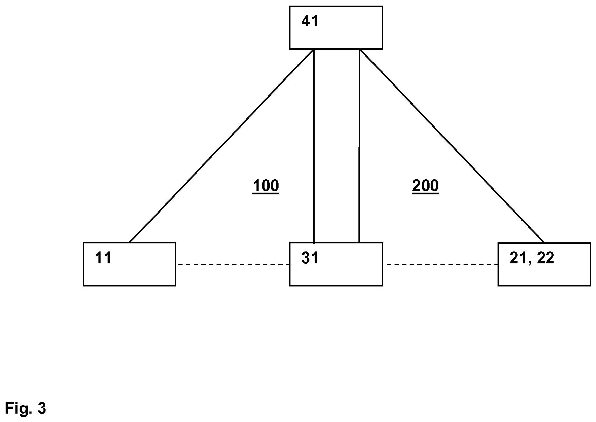

Insbesondere sind die erste bis vierte Anwendungskomponente 11, ..., 14 Webapplikationen, die auf einem oder mehreren Webservern ausgeführt werden und insbesondere zur Kommunikation mit einem Benutzer - insbesondere über einen Webbrowser (siehe z.B. Bezugszeichen 41 in Figur 3) konfiguriert sind.

Insbesondere sind die die erste und weitere erste Kontrollkomponente 21, 21' derart konfiguriert, dass jeweils ein Kontrolldienst - beispielsweise Providerdienste für Login-Dienste (IDP) - durch die erste und weitere erste Kontrollkomponente 21, 21' an eine anfragende Komponente (hier an die erste bis vierte Anwendungskomponente 11, ...,, 14) bereitgestellt wird.

Weiterhin ist hier die zweite und weitere zweite Kontrollkomponente 22, 22' insbesondere derart konfiguriert, dass jeweils ein Kontrolldienst - beispielsweise ein Providerdienst für Bezahl-Dienste (PSP) - durch die zweite und weitere zweite Kontrollkomponente 22, 22' an eine anfragende Komponente (hier an die erste bis vierte Anwendungskomponente 11, ...,, 14) bereitgestellt wird.

Sofern ein Betreiber des Netzwerks eine Vielzahl solcher Anwendungskomponenten (hier die erste bis vierte Anwendungskomponente 11, ..., 14) mit mehreren fremden Diensten - d.h. mit externen Kontrolldiensten wie beispielsweise Providerdienste für Login-Dienste (IDP) oder Bezahl-Dienste (PSP) - verwendet, muss jede Anwendungskomponente 11, ..., 14 an die fremden Dienste angebunden werden - d.h. derart zur Kommunikation mit der Vielzahl von Kontrollkomponenten (hier die erste, weitere erste, zweite und weitere zweite Kontrollkomponente 21, 21', 22, 22') konfiguriert sein, dass die Kontrolldienste der Kontrollkomponenten 21, 21', 22, 22' den Anwendungskomponenten 11, ..., 14 bereitgestellt werden. Hierdurch entsteht ein vergleichsweise hoher Aufwand zur Pflege der einzelnen Schnittstellen zur Kommunikation zwischen der Vielzahl von Anwendungskomponenten 11, ..., 14 und der Vielzahl von Kontrollkomponenten 21, 21', 22, 22'.

In Figur 2 ist schematisch eine Ansicht eines erfindungsgemäßen Netzwerks dargestellt. Hier weist das Netzwerk eine erfindungsgemäße Vermittlungskomponente 31 auf, wobei die Vermittlungskomponente 31 derart konfiguriert ist, dass die fremden Dienste - d.h. die externen Kontrolldienste der an das Netzwerk angebundenen Vielzahl von Kontrollkomponenten 21, 21', 22, 22' - gegenüber den eigenen Diensten (der ersten bis vierten Anwendungskomponente 11, ..., 14) durch die Vermittlungskomponente 31 derart gekapselt werden, dass jeweils nur eine erste Schnittstelle (einer ersten Schnittstellensorte) gegenüber den (internen oder eigenen) Anwendungskomponenten und jeweils nur eine zweite Schnittstelle (einer zweiten Schnittstellensorte) zu den (externen oder fremden) Kontrolldiensten existiert.

Die Vermittlungskomponente 31 agiert hier gegenüber der ersten bis vierten Anwendungskomponente 11, 12, 13, 14 - über die erste Schnittstelle (der Vermittlungskomponente 31), welche die Schnittstellen gegenüber der Vielzahl (fremder oder externer) Kontrollkomponenten 21, 21', 22, 22' kapselt - wie eine erste, weitere erste, zweite und/oder weitere zweite Kontrollkomponente 21, 21', 22, 22' (d.h. beispielsweise wie ein IDP und/oder PSP).

In Figur 3 ist schematisch eine Ansicht eines erfindungsgemäßen Netzwerks dargestellt, wobei hier die Kommunikation einer erfindungsgemäßen Vermittlungskomponente 31 mit einer Clientkomponente 41 (beispielsweise ein mit einem Benutzer assoziierter Browser), einer ersten Anwendungskomponente 11 (beispielsweise eine Webapplikation) und einer ersten Kontrollkomponente 21 (und/oder zweiten Kontrollkomponente 22) gezeigt ist. Hier werden die erste Anwendungskomponente 11 und die erste Kontrollkomponente 21 repräsentativ für die Vielzahl von Anwendungskomponenten 11, ..., 14 und Kontrollkomponenten 21, 21', 22, 22' beschrieben, wobei die Kommunikation der Vermittlungskomponente 31 mit der Vielzahl von Anwendungskomponenten 11, ..., 14 und der Vielzahl von Kontrollkomponenten 21, 21', 22, 22' insbesondere jeweils in gleicher Weise erfolgt oder erfolgen kann.

Die Vermittlungskomponente 31 (welche hier auch als "Broker" bezeichnet wird) ist insbesondere derart konfiguriert, dass eine Kommunikation der Vermittlungskomponente 31 mit der ersten Anwendungskomponente 11 (siehe Bezugszeichen 100) - über die erste Schnittstelle der Vermittlungskomponente - und eine Kommunikation der Vermittlungskomponente 31 mit der ersten Kontrollkomponente 21 (siehe Bezugszeichen 200) - über die zweite Schnittstelle der Vermittlungskomponente 31 - mittels jeweils unterschiedlicher Übertragungsprotokolle erfolgt. Beispielsweise werden als Übertragungsprotokolle SAML, OpenID, OAuth oder andere Übertragungsprotokolle verwendet. Auf beiden Kommunikationsseiten (hier durch Bezugszeichen 100 und 200 angedeutet) werden insbesondere unterschiedliche Sicherheitsrichtlinien (d.h. sog. "Security-Richtlinien") realisiert. Beispielsweise werden hierdurch sogenannte geschlossene Dreiecke (d.h., dass - wie durch die gestrichelten Linien angedeutet - eine zusätzliche Host-zu-Host Kommunikation zwischen Anwendungskomponente 11 bzw. erster Kontrollkomponente 21 und Vermittlungskomponente 31 erfolgt) oder offene Dreiecke (d.h., dass - wie durch die durchgezogenen Linien angedeutet - alle Informationen über den Browser beim Benutzer verschlüsselt in den sogenannten Redirect-URLs transferiert werden) realisiert.

Die Vermittlungskomponente weist insbesondere eine Funktionalität und/oder Logik auf, die derart konfiguriert ist/sind, dass zusätzlich festgelegt wird, welche Kontrollkomponente der Vielzahl von Kontrollkomponenten 21, 21', 22, 22' (d.h. ISP oder PSP) für eine (bestimmte) Anwendungskomponente der Vielzahl von Anwendungskomponenten 11, ..., 14 verwendet werden darf bzw. verwendet wird. Diese Festlegung bzw. Auswahl erfolgt beispielsweise in Abhängigkeit einer Sicherheitsstufe der bestimmten Anwendungskomponente (d.h. der Webapplikation), einer Höhe eines Geldbetrags und/oder einer ermittelten Lokation.

## Patentansprüche

1. Verfahren zur Bereitstellung von externen Kontrolldiensten in einem Netzwerk, wobei das Netzwerk eine erste Anwendungskomponente (11), eine zweite Anwendungskomponente (12) und eine Vermittlungskomponente (31) umfasst, wobei eine erste und zweite Kontrollkomponente (21, 22) an dem Netzwerk angebunden ist, wobei das Verfahren folgende Verfahrensschritte umfasst:
-- Empfangen einer von der ersten Anwendungskomponente (11) an die Vermittlungskomponente (31) gesendeten ersten Kontrollanfrageinformation,
-- Empfangen einer von der zweiten Anwendungskomponente (12) an die Vermittlungskomponente (31) gesendeten zweiten Kontrollanfrageinformation,
-- Abfragen einer ersten Kontrollantwortinformation bei der ersten oder zweiten Kontrollkomponente (21, 22) in Abhängigkeit der empfangenen ersten Kontrollanfrageinformation,
-- Abfragen einer zweiten Kontrollantwortinformation bei der ersten oder zweiten Kontrollkomponente (21, 22) in Abhängigkeit der empfangenen zweiten Kontrollanfrageinformation,
-- Übertragen der abgefragten ersten Kontrollantwortinformation an die erste Anwendungskomponente (11) und der zweiten Kontrollantwortinformation an die zweite Anwendungskomponente (11),
wobei die Kommunikation der Vermittlungskomponente (31) mit der ersten und zweiten Anwendungskomponente (11, 12) jeweils über eine Schnittstelle der Vermittlungskomponente (31) einer ersten Schnittstellensorte erfolgt, wobei die Kommunikation der Vermittlungskomponente (31) mit der ersten und zweiten Kontrollkomponente (21, 22) jeweils über eine zweite Schnittstelle der Vermittlungskomponente (31) einer zweiten Schnittstellensorte erfolgt.

2. Verfahren nach Anspruch 1, **dadurch gekennzeichnet, dass** durch die Vermittlungskomponente (31) zur Kommunikation mit der ersten und zweiten Anwendungskomponente (11, 12) ein erstes Übertragungsprotokoll verwendet wird und zur Kommunikation mit der ersten und zweiten Kontrollkomponente (21, 22) ein von dem ersten Übertragungsprotokoll verschiedenes zweites Übertragungsprotokoll verwendet wird.

3. Verfahren nach einem der vorhergehenden Ansprüche, **dadurch gekennzeichnet, dass** für die Kommunikation der Vermittlungskomponente (31) mit der ersten und/oder zweiten Anwendungskomponente (11, 12) eine erste Sicherheitsrichtlinie verwendet wird und für die Kommunikation der Vermittlungskomponente (31) mit der ersten und/oder zweiten Kontrollkomponente (21, 22) eine zweite Sicherheitsrichtlinie verwendet wird.

4. Verfahren nach einem der vorhergehenden Ansprüche, **dadurch gekennzeichnet, dass** die erste Kontrollkomponente (21) eine Authentifizierungskomponente (21, 21') und die zweite Kontrollkomponente (22) eine Autorisierungskomponente ist.

5. Verfahren nach einem der vorhergehenden Ansprüche, **dadurch gekennzeichnet**,
-- dass die Vermittlungskomponente (31) die erste und/oder zweite Kontrollantwortinformation bei der Authentifizierungskomponente (21) abfragt, wenn die erste und/oder zweite Kontrollanfrageinformation eine Authentifizierungsanfrageinformation aufweist, wobei die abgefragte erste und/oder zweite Kontrollantwortinformation eine Authentifizierungsinformation aufweist, und/oder
-- dass die Vermittlungskomponente (31) die erste und/oder zweite Kontrollantwortinformation bei der Autorisierungskomponente (22) abfragt, wenn die erste und/oder zweite Kontrollanfrageinformation eine Autorisierungsanfrageinformation aufweist, wobei die abgefragte erste und/oder zweite Kontrollantwortinformation eine Autorisierungsinformation aufweist.

6. Verfahren nach einem der vorhergehenden Ansprüche, **dadurch gekennzeichnet, dass** das Verfahren ferner folgende Verfahrensschritte umfasst:
-- Empfangen von Kontrolldaten durch die erste Anwendungskomponente (11), wobei die Kontrolldaten von einer Clientkomponente (41) an die erste Anwendungskomponente (11) übertragen werden,
-- Generieren der ersten Kontrollanfrageinformation, sodass die erste Kontrollanfrageinformation die Kontrolldaten zur Abfrage der ersten Kontrollantwortinformation aufweist.

7. Verfahren nach einem der vorhergehenden Ansprüche, **dadurch gekennzeichnet, dass** die erste und zweite Anwendungskomponente (11, 12) Webapplikationen sind, wobei die Clientkomponente (41) ein Webbrowser ist, wobei die Kontrolldaten von einem Benutzer des Webbrowsers abgefragt werden oder von der Clientkomponente automatisch ermittelt werden, wobei insbesondere als Kontrolldaten benutzerspezifische Login-Daten oder Bezahldaten verwendet werden.

8. Verfahren nach einem der vorhergehenden Ansprüche, **dadurch gekennzeichnet, dass** das Verfahren ferner folgende Verfahrensschritte umfasst:
-- Empfangen einer von der ersten Anwendungskomponente (11) an die Vermittlungskomponente (31) gesendeten weiteren ersten Kontrollanfrageinformation,
-- Abfragen einer weiteren ersten Kontrollantwortinformation bei der ersten Kontrollkomponente (21), einer weiteren ersten Kontrollkomponente (21'), der zweiten Kontrollkomponente (22) oder einer weiteren zweiten Kontrollkomponente (22') in Abhängigkeit der empfangenen weiteren ersten Kontrollanfrageinformation,
-- Übertragen der abgefragten weiteren ersten Kontrollantwortinformation an die erste Anwendungskomponente (11).

9. Verfahren nach einem der vorhergehenden Ansprüche, **dadurch gekennzeichnet, dass** das Verfahren ferner folgende Verfahrensschritte umfasst:
-- Empfangen, an der Vermittlungskomponente (31), einer Vielzahl von Kontrollanfrageinformationen von einer Vielzahl von Anwendungskomponenten (11, 12, 13, 14), wobei jede Kontrollanfrageinformation eindeutig einer Anwendungskomponenten der Vielzahl von Anwendungskomponenten (11, 12, 13, 14) zugeordnet ist,
-- Abfragen einer Vielzahl von Kontrollantwortinformationen bei einer Vielzahl von Kontrollkomponenten (21, 21', 22, 22'), wobei jede Kontrollantwortinformation der Vielzahl von Kontrollantwortinformationen jeweils bei genau einer Kontrollkomponente der Vielzahl von Kontrollkomponenten (21, 21', 22, 22') in Abhängigkeit genau einer Kontrollanfrageinformation der Vielzahl von Kontrollanfrageinformationen abgefragt wird,
-- Übertragen der Vielzahl von abgefragten Kontrollantwortinformationen an die jeweils eindeutig zugeordnete Anwendungskomponente der Vielzahl von Anwendungskomponenten (11, 12, 13, 14).

10. Vermittlungskomponente (31) zur Bereitstellung von externen Kontrolldiensten in einem Netzwerk, wobei die Vermittlungskomponente (31) zur Kommunikation mit einer ersten Anwendungskomponente (11), einer zweiten Anwendungskomponente (12) einer ersten Kontrollkomponente (21) und einer zweiten Kontrollkomponenten (22) konfiguriert ist, wobei die Vermittlungskomponente (31) zum Empfangen einer von der ersten Anwendungskomponente (11) an die Vermittlungskomponente (31) gesendeten ersten Kontrollanfrageinformation und zum Empfangen einer von der zweiten Anwendungskomponente (12) an die Vermittlungskomponente (31) gesendeten zweiten Kontrollanfrageinformation konfiguriert ist, wobei die Vermittlungskomponente (31) zum Abfragen einer ersten Kontrollantwortinformation bei der ersten oder zweiten Kontrollkomponente (21, 22) in Abhängigkeit der empfangenen ersten Kontrollanfrageinformation konfiguriert ist, wobei die Vermittlungskomponente (31) zum Abfragen einer zweiten Kontrollantwortinformation bei der ersten oder zweiten Kontrollkomponente (21, 22) in Abhängigkeit der empfangenen zweiten Kontrollanfrageinformation konfiguriert ist, wobei die Vermittlungskomponente (31) zum Übertragen der abgefragten ersten Kontrollantwortinformation an die erste Anwendungskomponente (11) und zum Übertragen der zweiten Kontrollantwortinformation an die zweite Anwendungskomponente (11) konfiguriert ist, wobei die Vermittlungskomponente (31) für die Kommunikation mit der ersten und zweiten Anwendungskomponente (11, 12) jeweils eine Schnittstelle einer ersten Schnittstellensorte aufweist und für die Kommunikation mit der ersten und zweiten Kontrollkomponente (21, 22) jeweils eine Schnittstelle einer zweiten Schnittstellensorte aufweist.

11. Vermittlungskomponente (31) nach Anspruch 10, **dadurch gekennzeichnet, dass** die Vermittlungskomponente (31) derart konfiguriert ist, dass die Vermittlungskomponente in Abhängigkeit der empfangenen ersten und/oder zweiten Kontrollanfrageinformation festlegt, bei welcher Kontrollkomponente der ersten und zweiten Kontrollkomponente (21, 22) die Kontrollantwortinformation abgefragt wird.

12. Computerprogramm mit Programmcodemitteln, mit deren Hilfe alle Schritte eines Verfahrens nach einem der Ansprüche 1 bis 9 durchführbar sind, wenn das Computerprogramm auf wenigstens einer programmierbaren Einrichtung eines Netzwerkes ausgeführt wird.

13. Computerprogrammprodukt mit einem computerlesbaren Medium und einem auf dem computerlesbaren Medium gespeicherten Computerprogramm mit Programmcodemitteln, die dazu geeignet sind, dass alle Schritte eines Verfahrens nach einem der Ansprüche 1 bis 9 durchführbar sind, wenn das Computerprogramm auf wenigstens einer programmierbaren Einrichtung eines Netzwerks ausgeführt wird.

## Claims

1. Method for providing external control services in a network, wherein the network comprises a first application component (11), a second application component (12) and a switching component (31), wherein a first and second control component (21, 22) is attached to the network, wherein the method comprises the following process steps:
- receiving first control request information sent by the first application component (11) to the switching component (31),
- receiving second control request information sent by the second application component (12) to the switching component (31),
- interrogating the first or second control component (21, 22) for first control response information depending on the received first control request information,
- interrogating the first or second control component (21, 22) for second control response information depending on the received second control request information,
- transmitting the interrogated first control response information to the first application component (11) and the second control response information to the second application component (11),
wherein communication of the switching component (31) with the first and second application component (11, 12) takes place respectively via an interface of the switching component (31) of a first interface style and wherein communication of the switching component (31) with the first and second control component (21, 22) takes place respectively via a second interface of the switching component (31) of a second interface style.

2. Method according to claim 1, **characterised in that** a first transmission protocol is used by the switching component (31) for communicating with the first and second application component (11, 12) and a second transmission protocol differing from the first transmission protocol is used for communicating with the first and second control component (21, 22).

3. Method according to any one of the preceding claims, **characterised in that** a first security guideline is used for communication by the switching component (31) with the first and/or second application component (11, 12) and a second security guideline is used for communication by the switching component (31) with the first and/or second control component (21, 22).

4. Method according to any one of the preceding claims, **characterised in that** the first control component (21) is an authentication component (21, 21') and the second control component (22) is an authorisation component.

5. Method according to any one of the preceding claims, **characterised in that**
- the switching component (31) interrogates the authentication component (21) for first and/or second control response information from, when the first and/or second control request information has authentication request information, wherein the interrogated first and/or second control response information has authentication information, and/or
- the switching component (31) interrogates the authorisation component (22) for first and/or second control response information, when the first and/or second control request information has authorisation request information, wherein the interrogated first and/or second control response information has authorisation information.

6. Method according to any one of the preceding claims, **characterised in that** the method additionally comprises the following process steps:
- receiving control data by means of the first application component (11), wherein the control data are transmitted from a client component (41) to the first application component (11),
- generating the first control request information, so that the first control request information has the control data for interrogating the first control response information.

7. Method according to any one of the preceding claims, **characterised in that** the first and second application components (11, 12) are web applications, wherein the client component (41) is a web browser, wherein the control data are interrogated by a user of the web browser or are automatically determined by the client component, wherein user-specific login data or payment data are used in particular as control data.

8. Method according to any one of the preceding claims, **characterised in that** the method additionally comprises the following process steps:
- receiving additional first control request information sent by the first application component (11) to the switching component (31),
- interrogating additional first control response information from the first control component (21), an additional first control component (21'), the second control component (22) or an additional second control component (22') depending on the additional first control request information received,
- transmitting the interrogated additional first control response information to the first application component (11).

9. Method according to any one of the preceding claims, **characterised in that** the method additionally comprises the following process steps:
- receiving, at the switching component (31), a plurality of control request information from a plurality of application components (11, 12, 13, 14), wherein each control request information is uniquely assigned to an application component of the plurality of application components (11, 12, 13, 14),
- interrogating a plurality of control response information from a plurality of control components (21, 21', 22, 22'), wherein each control response information of the plurality of control response information is interrogated respectively in the case of exactly one control component of the plurality of control components (21, 21', 22, 22') depending on exactly one control request information from the plurality of control request information,
- transmitting the plurality of interrogated control response information to the respectively uniquely assigned application component of the plurality of application components (11, 12, 13, 14).

10. Switching component (31) for the provision of external control services in a network, wherein the switching component (31) is configured for communication with a first application component (11), a second application component (12) of a first control component (21) and a second control component (22), wherein the switching component (31) is configured for receiving first control request information sent by the first application component (11) to the switching component (31) and for receiving second control request information sent by the second application component (12) to the switching component (31), wherein the switching component (31) is configured for interrogating first control response information from the first or second control component (21, 22) depending on the received first control request information, wherein the switching component (31) is configured for interrogating second control response information from the first or second control component (21, 22) depending on the received second control request information, wherein the switching component (31) is configured for transmitting the interrogated first control response information to the first application component (11) and for transmitting the second control response information to the second application component (11), wherein the switching component (31) has respectively an interface of a first interface style for communicating with the first and second application component (11, 12) and respectively an interface of a second interface style for communicating with the first and second control component (21, 22).

11. Switching component (31) according to claim 10, **characterised in that** the switching component (31) is configured such that depending on the received first and/or second control request information said switching component determines from which control component of the first and second control components (21, 22) the control response information is interrogated.

12. Computer program with program code means, with whose help all the process steps according to any one of claims 1 to 9 can be implemented if the computer program is executed on at least one programmable element of a network.

13. Computer program product with a computer-readable medium and a computer program with program code means stored on the computer-readable medium, which are suitable to ensuring that all the process steps according to any one of claims 1 to 9 can be implemented if the computer program is executed on at least one programmable element of a network.

## Revendications

1. Procédé de fourniture de services de contrôle dans un réseau, dans lequel le réseau comprend une première composante applicative (11), une deuxième composante applicative (12) et une composante de commutation (31), dans lequel une première et deuxième composante de contrôle (21, 22) est raccordée au réseau, dans lequel le procédé comprend les étapes de procédé suivantes :
- réception d'une première information de demande de contrôle envoyée par la première composante applicative (11) à la composante de commutation (31),
- réception d'une deuxième information de demande de contrôle envoyée par la deuxième composante applicative (12) à la composante de commutation (31),
- requête d'une première information de réponse de contrôle par la première ou deuxième composante de contrôle (21, 22) en fonction de la première information de demande de contrôle reçue,
- requête d'une deuxième information de réponse de contrôle par la première ou deuxième composante de contrôle (21, 22) en fonction de la deuxième information de demande de contrôle reçue,
- transmission de la première information de réponse de contrôle requise à la première composante applicative (11) et de la deuxième information de réponse de contrôle à la deuxième composante applicative (11),
dans lequel la communication de la composante de commutation (31) avec la première et deuxième composante applicative (11, 12) s'effectue respectivement par le biais d'une interface de la composante de commutation (31) d'un premier type d'interface, dans lequel la communication de la composante de commutation (31) avec la première et deuxième composante de contrôle (21, 22) s'effectue respectivement par le biais d'une deuxième interface de la composante de commutation (31) d'un deuxième type d'interface.

2. Procédé selon la revendication 1, **caractérisé en ce qu'**un premier protocole de transmission est utilisé par la composante de commutation (31) pour la communication avec la première et deuxième composante applicative (11, 12) et un deuxième protocole de transmission, différent du premier protocole de transmission, est utilisé par la composante de commutation (31) pour la communication avec la première et deuxième composante de contrôle (21, 22).

3. Procédé selon l'une des revendications précédentes, **caractérisé en ce qu'**une première politique de sécurité est utilisée pour la communication de la composante de commutation (31) avec la première et/ou deuxième composante applicative (11, 12) et une deuxième politique de sécurité est utilisée pour la communication de la composante de commutation (31) avec la première et/ou deuxième composante de contrôle (21, 22).

4. Procédé selon l'une des revendications précédentes, **caractérisé en ce que** la première composante de contrôle (21) est une composante d'authentification (21, 21') et la deuxième composante de contrôle (22) est une composante d'autorisation.

5. Procédé selon l'une des revendications précédentes, **caractérisé en ce que**
- la composante de commutation requiert auprès de la composante d'authentification (21) la première et/ou deuxième information de réponse de contrôle lorsque la première et/ou deuxième information de demande de contrôle comporte une information de demande d'authentification, dans lequel la première et/ou deuxième information de réponse de contrôle requise comporte une information d'authentification, et/ou **en ce que**
- la composante de commutation requiert auprès de la composante d'autorisation (22) la première et/ou deuxième information de réponse de contrôle lorsque la première et/ou deuxième information de demande de contrôle comporte une information de demande d'autorisation, dans lequel la première et/ou deuxième information de réponse de contrôle requise comporte une information d'autorisation.

6. Procédé selon l'une des revendications précédentes, **caractérisé en ce que** le procédé comprend en outre les étapes de procédé suivantes :
- réception de données de contrôle par la première composante applicative (11), dans lequel les données de contrôle sont transmises depuis une composante de client (41) à la première composante applicative (11),
- génération de la première information de demande de contrôle, de sorte que la première information de demande de contrôle comporte les données de contrôle pour la requête de la première information de réponse de contrôle.

7. Procédé selon l'une des revendications précédentes, **caractérisé en ce que** la première et la deuxième composante applicative (11, 12) sont des applications Web, dans lequel la composante de client (41) est un navigateur Web, dans lequel les données de contrôle sont requises d'un utilisateur du navigateur Web ou sont déterminées automatiquement par la composante de client, dans lequel en particulier des identifiants de connexion ou des informations de paiement sont utilisés comme données de contrôle.

8. Procédé selon l'une des revendications précédentes, **caractérisé en ce que** le procédé comprend en outre les étapes de procédé suivantes :
- réception d'une première information de demande de contrôle supplémentaire envoyée par la première composante applicative (11) à la composante de commutation (31),
- requête d'une première information de réponse de contrôle supplémentaire par la première composante de contrôle (21), par une première composante de contrôle supplémentaire (21'), par la deuxième composante de contrôle (22) ou par une deuxième composante de contrôle supplémentaire (22') en fonction de la première information de demande de contrôle supplémentaire reçue,
- transmission de la première information de réponse de contrôle supplémentaire requise à la première composante applicative (11)

9. Procédé selon l'une des revendications précédentes, **caractérisé en ce que** le procédé comprend en outre les étapes de procédé suivantes :
- réception à la composante de commutation (31) d'une pluralité d'informations de demande de contrôle depuis une pluralité de composantes applicatives (11, 12, 13, 14), dans lequel chaque information de demande de contrôle est assignée de façon univoque à une composante applicative de la pluralité de composantes applicatives (11, 12, 13, 14),
- requête d'une pluralité d'informations de réponse de contrôle par une pluralité de composantes de contrôle (21, 21', 22, 22'), dans lequel chaque information de réponse de contrôle de la pluralité d'informations de réponse de contrôle est respectivement requise par exactement une composante de contrôle de la pluralité de composantes de contrôle (21, 21', 22, 22') en fonction d'exactement une information de réponse de contrôle de la pluralité d'informations de réponse de contrôle,
- transmission de la pluralité d'informations de réponse de contrôle requises à la composante applicative assignée de façon univoque de la pluralité de composantes applicatives (11, 12, 13, 14).

10. Composante de commutation (31) destinée à la fourniture de services de contrôle dans un réseau, dans laquelle la composante de commutation (31) est configurée pour la communication avec une première composante applicative (11), une deuxième composante applicative (12), une première composante de contrôle (21) et une deuxième composante de contrôle (22), dans laquelle la composante de commutation (31) est configurée pour la réception d'une première information de demande de contrôle envoyée par la première composante applicative (11) à la composante de commutation (31) et pour la réception d'une deuxième information de demande de contrôle envoyée par la deuxième composante applicative (12) à la composante de commutation (31), dans laquelle la composante de commutation (31) est configurée pour la requête d'une première information de réponse de contrôle par la première ou deuxième composante de contrôle (21, 22) en fonction de la première information de demande de contrôle reçue, dans laquelle la composante de commutation (31) est configurée pour la requête d'une deuxième information de réponse de contrôle par la première ou deuxième composante de contrôle (21, 22) en fonction de la deuxième information de demande de contrôle reçue, dans laquelle la composante de commutation (31) est configurée pour la transmission de la première information de réponse de contrôle requise à la première composante applicative (11) et de la deuxième information de réponse de contrôle à la deuxième composante applicative (11), dans laquelle la composante de commutation (31) comporte respectivement une interface d'un premier type d'interface pour la communication avec la première et deuxième composante applicative (11, 12) et comporte respectivement une interface d'un deuxième type d'interface pour la communication avec la première et deuxième composante de contrôle (21, 22).

11. Composante de commutation (31) selon la revendication 10, **caractérisée en ce que** la composante de commutation (31) est configurée de telle sorte que la composante de commutation est établie en fonction de la première et/ou deuxième information de demande de contrôle, l'information de réponse de contrôle étant requise par cette composante de contrôle de la première et deuxième composante de contrôle (21, 22).

12. Programme informatique doté de moyens de code de programme, à l'aide desquels toutes les étapes d'un procédé d'après l'une des revendications 1 à 9 peuvent être mises en œuvre, lorsque le programme informatique est exécuté sur au moins un dispositif programmable d'un réseau.

13. Produit-programme informatique doté d'un support lisible par ordinateur et d'un programme informatique enregistré sur le support lisible par ordinateur doté de moyens de code de programme, qui sont adaptés de telle sorte que toutes les étapes d'un procédé d'après l'une des revendications 1 à 9 peuvent être mises en œuvre, lorsque le programme informatique est exécuté sur au moins un dispositif programmable d'un réseau.
